Europäisches Patentamt

**European Patent Office**

Office européen des brevets

(19)

(11) Publication number: **0 222 480**
**A1**

## (12) EUROPEAN PATENT APPLICATION

(21) Application number: **86307506.5**

(22) Date of filing: **01.10.86**

(51) Int. Cl.⁴: **B 62 B 3/10**

(30) Priority: **02.10.85 CA 492105**

(43) Date of publication of application:
**20.05.87 Bulletin 87/21**

(84) Designated Contracting States:
**AT BE CH DE ES FR GB IT LI LU NL SE**

(71) Applicant: **Silzer, Madj**
**102 Rodenbush Drive**
**Regina Saskatchewan S4R 7X9(CA)**

(72) Inventor: **Silzer, Madj**
**102 Rodenbush Drive**
**Regina Saskatchewan S4R 7X9(CA)**

(74) Representative: **Messulam, Alec Moses**
**A. Messulam & Co. 24 Broadway**
**Leigh on Sea Essex SS9 1BN(GB)**

(54) **Shopping cart.**

(57) The invention relates to shopping carts and to a cart formed by a chassis module and a basket module both moulded from a thermoset plastic material.

FIG.1

EP 0 222 480 A1

0222480

The present invention relates to the field of shopping carts, in particular to shopping carts which are utilized in supermarkets and grocery stores.

It is common, in grocery stores, to provide large, wheeled, shopping carts, which basically consist of a lower, four cornered chassis, each corner of which is provided with a wheel on a castor; and an upper basket portion, for holding food items. Shopping carts are usually constructed entirely out of metal, usually steel, except for their wheels which are usually solid rubber. It will thus be appreciated that these shopping carts are somewhat noisy, difficult to maneuver, and difficult to observe in dark parking-lots. Also, because of the use of wire or wire-like baskets, they often present a series of jagged edges on which one could easily snag a piece of clothing, or possibly cause human injury.

These carts too, are exposed to many abuses in the store environment. Since they are continuously being impacted against each other, against stationery objects, and against moving objects such as cars, these carts must be able to withstand a great deal of stress. The temperature extremes of heat and cold also greatly add to this stress factor. Castered cart wheels must be able to endure these abuses and still maintain a high degree of maneuverability and ease of steering under load. As well, the finish of the cart must be of such quality that the other environment factors do not cause it to crack, rust, flake, or otherwise create a propensity to collect dirt and other contaminants, as well as violating the aesthetic appearance of the cart. Other benefits which should be intrinsic to the shopping cart include their safety (not prone to presenting jagged edges conducive to injuring cars, people, or clothing); the ability to maintain their attractiveness over a long period of time; to be able to be maintained easily and inexpensively; to be able to withstand strong detergents, steam, solvents, or other cleaning material.

It will be appreciated that the conventional metal wire shopping cart does not meet many of the above criteria with acceptable success. Indeed, these shopping carts are noisy, difficult to maneuver, prone to denting and other structure trauma when impacted, rust easily, require costly and frequent maintenance, often present hazardous edges which tear and scratch, and the front castered wheels consistently degenerate to the point of sever oscillation and other steering difficulties.

Thus, it is an object of the present invention to provide a shopping cart to overcome the above-noted disadvantages associated with known shopping carts and to provide a relatively inexpensive cart which is easy rolling, quiet, and which is provided with a basket presenting continuous, smooth edges.

Accordingly, the present invention relates to a shopping cart including a chassis module, a basket module secured to said chassis module and supported thereby, and a plurality of wheels mounted on the underside of said chassis module, said modules being formed of a moulded thermoset plastic material.

The invention is illustrated by way of example, in the accompanying drawings in which:

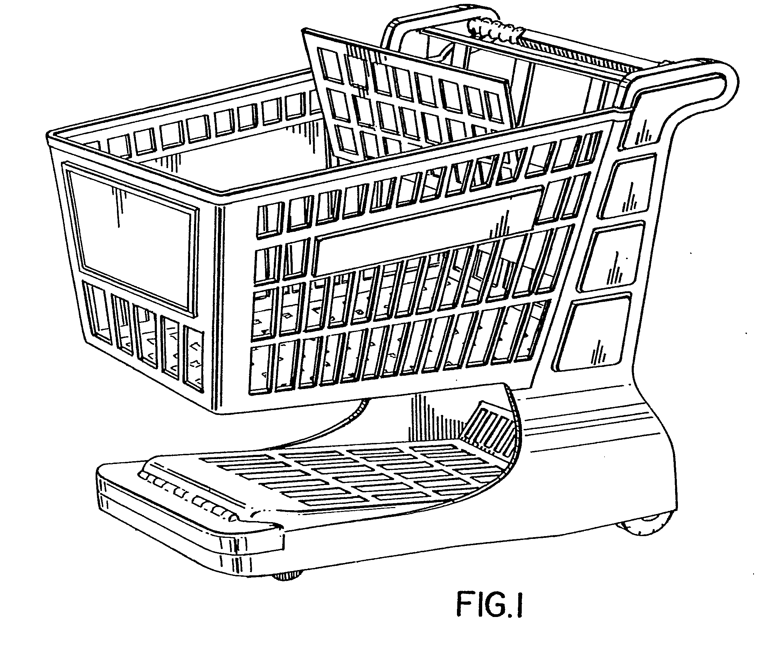

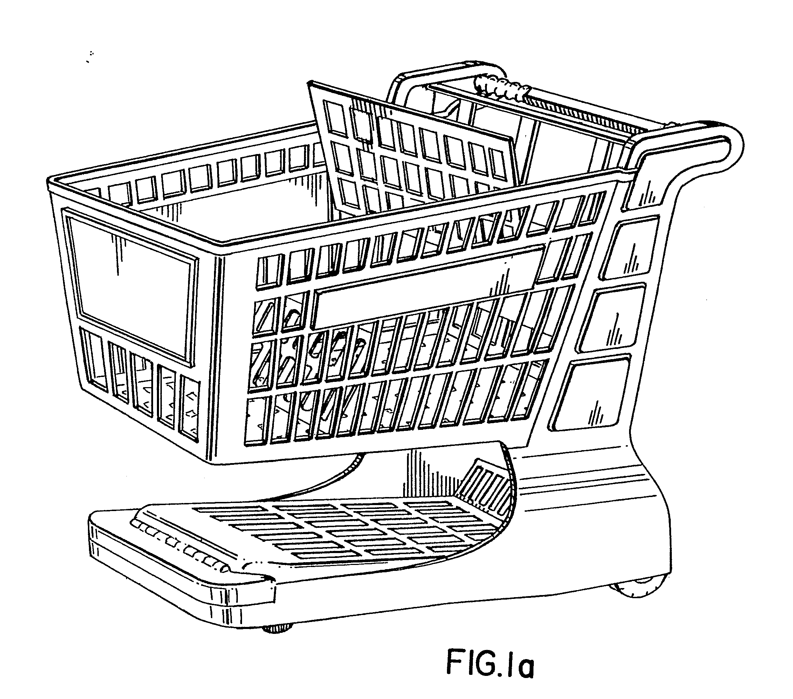

Figure 1 is a front perspective view of a shopping cart embodying the present invention;

Figure 1a is a modified form of the embodiment of Figure 1;

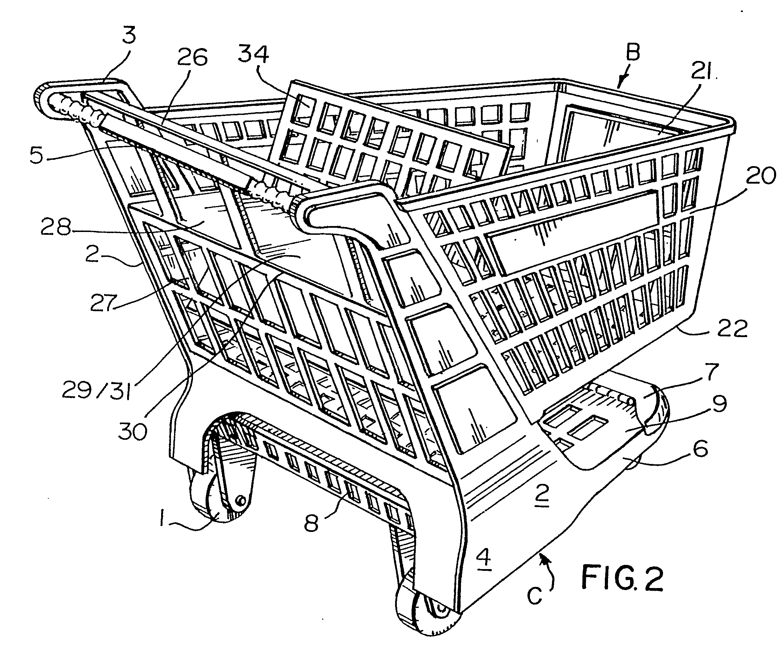

Figures 2 is a rear perspective of the cart of Figure 1, with reference numerals added;

Figures 3 is a top view of the cart of Figure 1;

Figure 4 is a rear view of the cart of Figure 1;

Figures 5 and 6 are cross-sectional views;

Figure 6 being a lateral view through the rear portion of the basket of the cart of Figure 1, and Figure 5 being a view through line V-V of Figure VI; the relative location of Figure 6 being shown by line VI-VI in Figure 5.

Figure 7 is a section through line VII-VII in Figure 6;

Figure 8 is a detail of the two portions which make up the hinges used in the cart of the present invention;

Figure 9 is a detail view; and

Figure 10 is a side view of the cart of Figure 1.

Referring to the drawings, it will be seen that a pair of modules is provided each formed of a moulded thermoset plastic material, that module, indicated generally at B, constituting a basket module secured to a chassis module indicated generally at C.

CHASSIS MODULE C

The chassis module C has a plurality of wheels 1 mounted on its underside and includes a pair of side members indicated generally at 2 each having an upwardly and rearwardly extending arm 3 and a downwardly and rearwardly extending leg 4 serving as the mounting for a said wheel 1. The arms 3 are connected together and spaced apart by a transversely extending handle member 5.

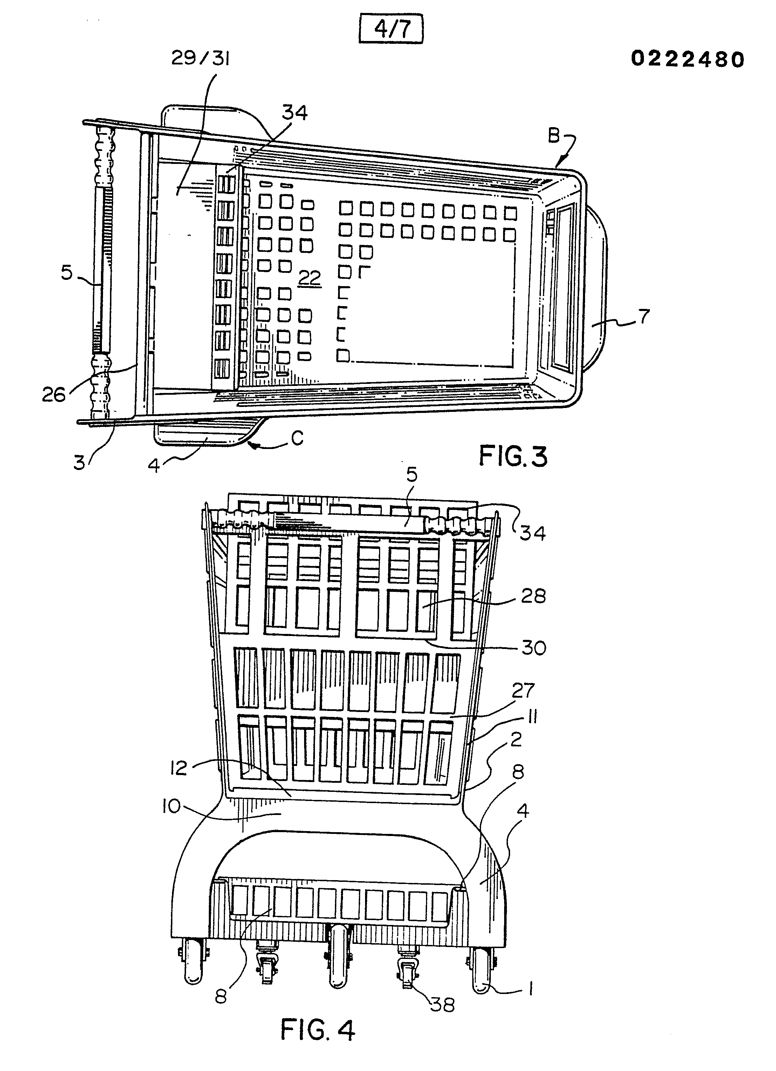

Each said side member 2 also has a lower and forwardly extending portion 6 and the pair of forwardly extending portions 6 are integrally connected together and spaced apart by a transversely extending cross-member 7 which serves as the mounting for at least one centrally disposed third wheel 1 (Figure 4). The cross-member 7 also serves as a load-bearing member.

The pair of side members 2 are also integrally connected together and spaced apart by a transversely extending cross-strut 8 adjacent the pair of rear wheels 1 which strut is integrally connected to the cross-member 7 by means of a tray 9 capable, when the cart is in use, of carrying bulky goods such as, for example sacks of potatoes and large cartons of produce etc.

The pair of side members 2 are also integrally connected together and spaced apart by a transversely extending load-bearing beam member indicated generally at 10 the ends of which beam member are located substantially adjacent to the junction of each arm 3 and the associated leg 4 of each said side member 2.

The interior surface of each side member 2 is provided with an inwardly projecting, and substantially vertically extending, flange 11 as well as with an upwardly projecting, and substantially transversely extending flange 12.

BASKET MODULE B

The basket module B includes a plurality of integrally connected side 20 and front 21 walls and a bottom 22 and is detachably secured to the chassis module C by means of bolts (not illustrated) passing through said bottom and the load-bearing beam member 10 where they are retained in position by means of nuts. Round-headed rivets (not illustrated) also serve to retain the each side wall 20 of the basket module B to an associated side member 2 of the chassis module C.

Each side wall 20 of the basket module B, adjacent the rearward end of its uppermost edge, serves as the mounting for a rod 26 extending from one said side wall to the remaining said side wall. The rod serves as the mounting for the upper portion of the rear wall 27 of said basket module B which is pivoted thereto and which wall, adjacent its upper edge, is provided with at least one cut-out 28 capable of reception of a child's legs. The wall 27 is also capable of pivotal movement towards the interior of the basket.

The basket module B also includes at least one shelf 29 which is pivotally mounted at 30 to the rear wall 27 and which, when in use, is capable of extending substantially normal therefrom. Moreover, a seat panel 31 is also provided and this, too, is pivotally mounted to the rear wall 27 at 30 and is capable, when in use, of overlying the shelf 29. When the seat panel 31 is not in use, it is capable of occluding the cut-out 28.

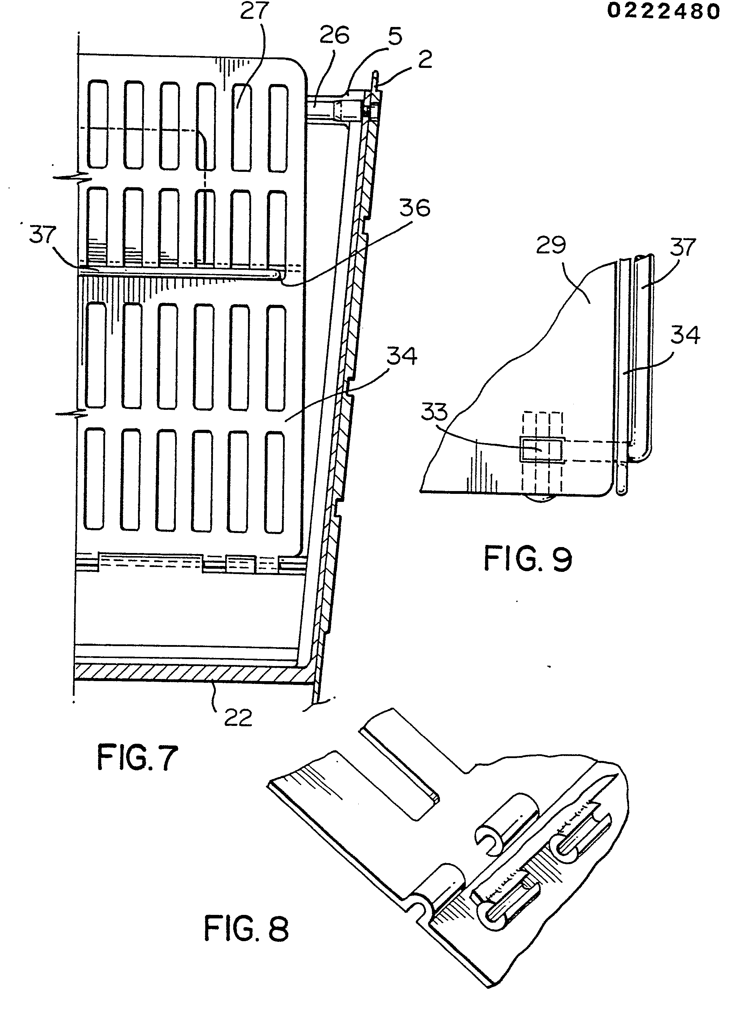

The basket module B also includes at least one shelf back panel 34 which, adjacent its lower end, is pivotally mounted to the pivoted rear wall 27 of the basket at 35. The rear wall 27 of the basket is prevented from pivoting outwardly towards the user of the shopping cart owing to the provision of the flanges 11 and 12. The pivots 30 and 35 are moulded piano hinges, a detail which is shown in Figure 8.

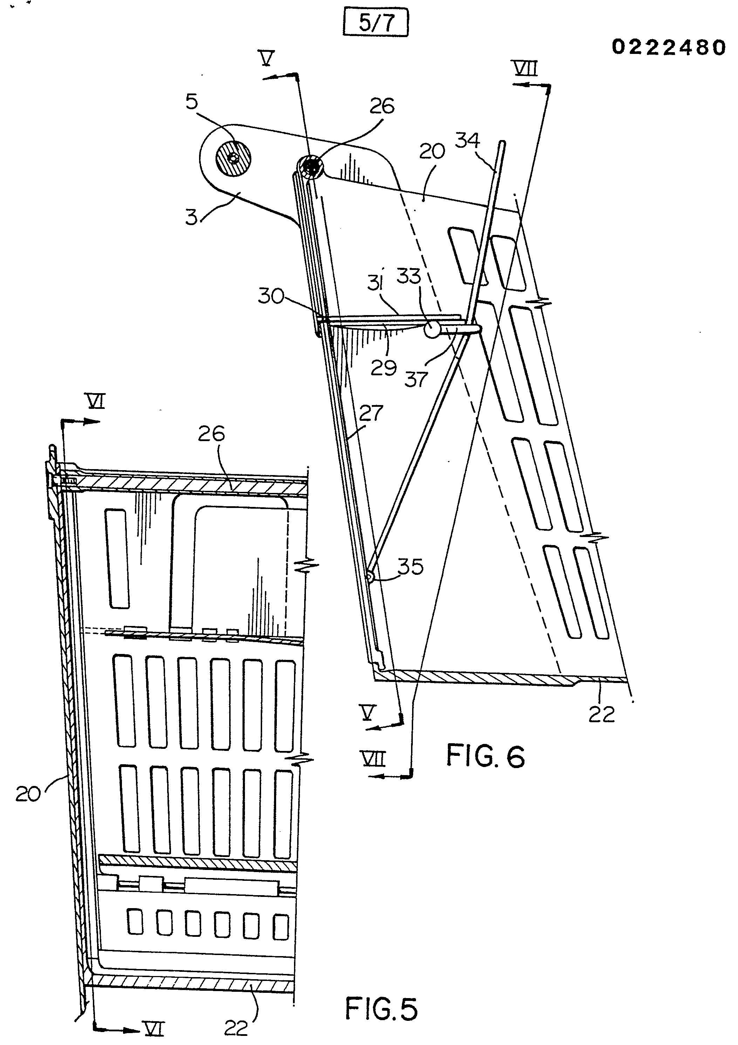

As shown in Figures 6, 7 and 9, the shelf 29 is provided with a U-shaped extension member 37 adapted to abut and sit on the bottom edge 36 of the elongated outermost vents in the back panel 34. The U-shaped extension 37 is slightly spaced from the leading edge of the shelf 29, the space serving to accommodate the thickness of the back panel 34 as is most clearly shown in Figure 9.

Extension 37 is pivotally connected to the underside of shelf 29 at pivot points 33, one pivot point being located at each of the right and left sides of the shelf 29. Accordingly, when shelf 29 is raised, extension 37 will move upwardly in the outermost vents on panel 34, until it reaches the top edges thereof. At this point, since the vents are not as long as the shelf 29 is long, the shelf will not be fully raised. To accommodate full raising of the shelf 29, extension 37 will pivot away from the underside of shelf 29 at point 33, allowing the shelf to be fully retracted, into an upright position. Moreover, it will be noted that there is a slight angulation toward the vertical in panel 34, at about the level of shelf 29 (in the down position). This angulation creates a nesting space for shelf 29 when shelf 29 is in the upright position and panel 34 fully drawn in toward rear wall 27.

If desired, the two rear wheels 1 of the cart are offset with respect to one another, so that when the basket is

- 8 -

pointed in a forwardly direction, the two wheels will not be co-axial. With such an arrangement, as the cart is turned to negotiate the very narrow aisles in a supermarket, there will be a greater stability and ease of turning. That is, while it can easily be seen and appreciated that the use of three castered wheels would be more economical than the use of four castered wheels, the use of three wheels has heretofore been undersirable, as the build-up of heavy items in one of the forward corners of the basket could, with the more traditional three wheel carts, easily result in the overbalancing and upsetting of the cart, especially upon turning. However, with one of the wheels offset forwardly from the other, (of the two rear wheels) greater support for the forward portion of the basket will result from effectively moving the weight bearing centre of the chassis forwardly. Also, there will be elimination of steering oscillation which accompanies the turning of a four wheeled cart.

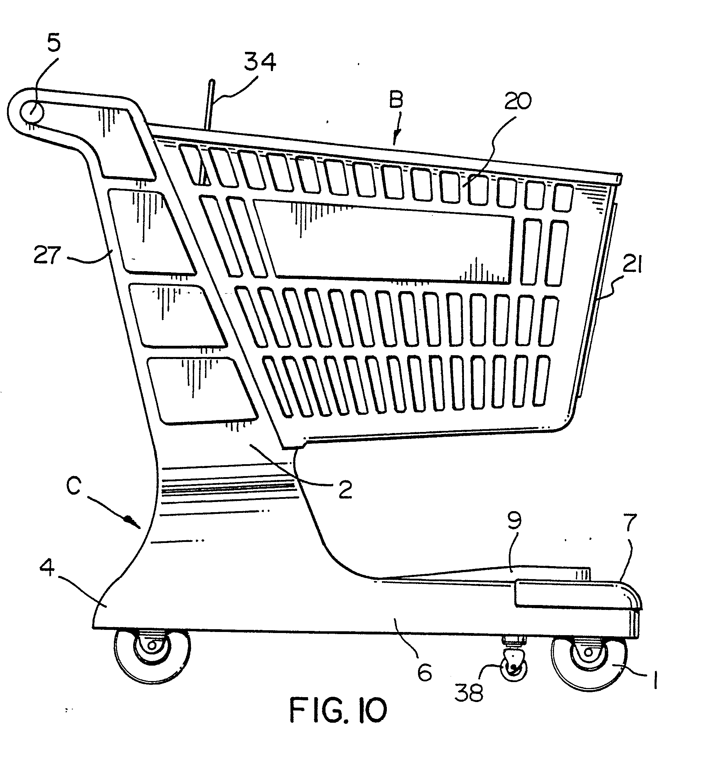

Moreover, and also if desired, the cart of the present invention may be further improved by the use of two small auxilliary wheels 38 (Figures 4 & 10) adjacent the forward wheel 1 of the cart, to provide even greater support under the front corners of the cart. The use of these small auxilliary wheels however, will not result in steering oscillation, as these wheels do not support the bulk of the load in the cart, and are used primarily as auxilliary wheels, to improve support during cornering. In such an embodiment, non-offset wheels may be used, with very good results, as the support occasioned by offsetting the rear wheels is compensated for by the use of auxilliary wheels.

It will also be appreciated that the thermoset plastic material in the manufacture of the chassis also permits the formation of wheel guards disposed about the wheels, to protect both the wheels and the feet of shoppers.

The thermoset plastic material employed in the moulding of modules B and C is selected from a group of polyurethanes especially formulated for utilization in reaction injection moulding equipment.

Preferably the thermoset plastic material is highly reflective so that it will easily reflect traffic lights, and therefore provide a measure of safety both·to the motorist bearing down upon it in a darkened parking-lot, and to a person propelling it through such parking-lot. Moreover, it will be seen that through the use of a one-piece molded basket module, all of the exposed edges of the basket portion are rounded, thus obviating any hazardous edges on which clothing might snag, or other injury might be occasioned.

CLAIMS

. A shopping cart including a chassis module, a basket module secured to said chassis module and supported thereby, and a plurality of wheels mounted on the underside of said chassis module, said modules being formed of a moulded thermoset plastic material.

. A shopping cart according to Claim 1 wherein said chassis module includes a pair of side members, each having an upwardly and rearwardly extending arm and a downwardly and rearwardly extending leg serving as the mounting for a wheel, said arms being connected together and spaced apart by a transversely extending handle, each said side member having a forwardly extending portion, said forwardly extending portions being connected together and spaced apart by a transversely extending cross-member serving as the mounting for at least one additional wheel, said cross-member also serving as a load-bearing member, said side members also being connected together and spaced apart by a transversely extending load-bearing beam located substantially adjacent to the junction of each said arm and its associated leg.

. A shopping cart according to Claim 2 wherein said basket module includes a plurality of interconnected side and front walls and a bottom, in addition to a rear wall said rear wall being pivotally mounted adjacent its upper end between said side walls and capable, of pivotal movement towards the interior of said
basket module.

4.      A shopping cart according to Claim 3 wherein said basket
module also includes at least a shelf pivotally mounted to the
said rear wall and capable, when in use, of extending
substantially normal therefrom.

5.      A shopping cart according to Claim 4 including a seat
panel pivotally mounted to said rear wall and, when in use,
overlying said shelf.

6.      A shopping cart according to Claim 5 wherein said seat,
when in an inoperative position is substantially parallel with
said rear wall and occludes at least one cut-out formed in said
rear wall.

7.      A shopping cart according to Claim 4, 5 or 6 wherein said
shelf is supported, when in its operative position, by a shelf
back panel hingedly connected to the rear wall adjacent the lowest
edge thereof and having a pair of vertical slots adjacent its side
edges, the lower edge of each slot being at substantially the same
level as said shelf; said shelf being provided with a U-shaped
extension hinged to its underside at a pair of spaced apart pivot
points; said U-shaped extension having a pair of arms each having
one end hingedly connected to a said pivot point, the other ends
passing through said slots and being joined together by a transverse member, said shelf back panel thereby being captive in said extension, and said extension thereby being capable of moving up and down said slots, and folding back against the underside of said shelf upon raising of said shelf to its inoperative position.

8.      A shopping cart according to Claim 1 wherein said thermoset plastic material is a polyurethane formulated for utilization in reaction injection moulding equipment.

9.      A shopping cart according to Claim 1, wherein said chassis module is supported by at least three wheels.

10.     A shopping cart according to Claim 9, wherein said wheels are arranged with one wheel at the front of the chassis module, and two wheels at the rear of the chassis module, one of said two rear wheels being located more forwardly than the other.

11.     A shopping cart according to Claim 10, wherein said chassis module includes molded wheel skirts around said wheels.

12.     A shopping cart according to Claim 9, 10 or 11, including two auxilliary wheels, each one adjacent a side of the forwardmost of said three wheels.

13.     A shopping cart as claimed in Claim 10 or 11, including three wheels arranged as a right angled triangle.

14. A shopping cart according to Claim 9 or 10 wherein said wheels are mounted on casters.

15. A shopping cart according to Claim 1 wherein said thermoset plastic material forming the moulded basket module is reflective.

FIG.1

0222480

FIG.1a

0222480

FIG.2

FIG. 3

FIG. 4

0222480

FIG. 6

FIG.5

0222480

FIG. 7

FIG. 8

FIG. 9

0222480

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 046 394 (WILLIAM A. THOMPSON, JR.) <br> * Figures 1-13; column 5, line 3 - column 10, line 11 * | 1,2,4 5,7,9, 11,15 | B 62 B 3/10 |
| X | US-A-4 268 049 (THOMAS R. SALVADOR) <br> * Figures 1-6; column 2, line 28 - column 5, line 17 * | 1 | |
| A | EP-A-0 125 569 (EISINGER JOHANN) <br> * Page 5, line 7 - page 9, line 26 * | 1 | |
| A | FR-A-2 388 708 (HOUSTON REHRIG) <br> * Figures 1-9; page 3, line 28 - page 7, line 3 * | 1 | TECHNICAL FIELDS SEARCHED (Int. Cl.4) |
| A | EP-A-0 176 168 (REHRIG) <br> * Figures 1-20; page 8, line 6 - page 11, line 33 * | 1 | B 62 B |
| A | US-A-3 844 577 (MICHAEL WAHL) <br> * Figures 1-3; column 1, line 62 - column 3, line 27 * | 1 | |
| P,X | DE-U-8 530 050 (SILZER) <br> * Figures 1-3; pages 4-6 * | 1,2 | |

-----

The present search report has been drawn up for all claims

| Place of search | Date of completion of the search | Examiner |
|---|---|---|
| THE HAGUE | 06-02-1987 | VANNESTE M.A.R. |